# EUROPEAN PATENT SPECIFICATION

(11) **EP 3 363 703 B1**
(45) Date of publication and mention of the grant of the patent: **01.04.2020**
(21) Application number: 18157154.8
(22) Date of filing: 16.02.2018
(51) Int. Cl.: B60T 8/36, B60T 8/17, B60T 8/32, B60T 13/68

(54) **CAULKING JIG, CAULKING METHOD, AND METHOD OF MANUFACTURING BRAKE CONTROL DEVICE FOR A VEHICLE**
ABDICHTVORRICHTUNG, ABDICHTVERFAHREN UND VERFAHREN ZUR HERSTELLUNG EINER BREMSENSTEUERVORRICHTUNG FÜR EIN FAHRZEUG
GABARIT DE CALFEUTRAGE, PROCÉDÉ DE CALFEUTRAGE ET PROCÉDÉ DE FABRICATION D'UN DISPOSITIF DE COMMANDE DE FREIN POUR UN VÉHICULE

(30) Priority: 17.02.2017 JP 2017028497
(43) Date of publication of application: 22.08.2018
(73) Proprietor: NISSIN KOGYO CO., LTD., Nagano, 389-0514 (JP)
(72) Inventor: Kodama, Takuro, Nagano, 389-0514 (JP); Shimono, Takuyo, Nagano, 389-0514 (JP)
(74) Representative: Hoffmann Eitle

(56) References cited:
- EP-A2- 1 911 647
- JP-A- 2008 121 702
- JP-B2- 4 062 748
- JP-B2- 5 209 838
- US-A- 3 113 252
- US-A1- 2005 073 194

## Description

### TECHNICAL FIELD

The present invention relates to a caulking jig, a caulking method, and a method of manufacturing a brake control device for a vehicle using the caulking jig.

### BACKGROUND ART

A configuration of a brake fluid pressure control device in which an assembling component such as an electromagnetic valve is fixed in a mounting hole of a base (a housing) in a caulking manner, for example, like a technology disclosed in Japanese Patent No. 5209838 is known, and the portion of an opening of the mounting hole is filled in a notched part, whereby the assembling component is fixed in a caulking manner.

In the case of the caulking fixation disclosed in Japanese Patent No. 5209838, since the caulking load is applied to spread outward in a radial direction, for example, in the case where the mounting holes for mounting the electromagnetic valves and the like on the base are adjacent to each other, the caulking load may exert influence on the adjacent mounting holes, and thus there is a problem that the layout is restricted.

Also, since the caulking load is applied to spread outward, it has been concerned that a problem may occur in the durability of a caulking inner part.

However, while it is demanded to reduce the size of a brake control device for a vehicle, it is desired a caulking technology capable of improving the durability of a caulking part while being capable of disposing mounting holes close to each other.

US-A1-2005/0073194, on which the two-part form of claim 1 and claim 3 is based, discloses a brake fluid control device including an ABS actuator having an electromagnetic valve which has a sleeve received in an assembly hole. In order to fix the sleeve within a housing, a punch is provided.

JP-B2-4062748 illustrates a punch for fixing a pump in a mounting hole in a housing in a caulking manner.

From JP 2008-121702, a guide pin installation structure of a disk brake device is known which includes a punch.

US 3,113,252 relates to means for encapsulating transistors.

### SUMMARY

An object of the present invention is to provide a caulking technology capable of improving the durability of a caulking part while being capable of laying out mounting holes close to each other the mounting holes which are formed in a base to mount electromagnetic valves and so on.

The invention relating to a first aspect is a cylindrical caulking jig for fixing an assembling component in a mounting hole formed in a base in a caulking manner, the caulking jig comprising:
a leading end part which protrudes on one end side in an axial direction, and which is adapted to come into contact with an opening edge part of the mounting hole first;
a curved part which is formed on an inner side in a radial direction from the leading end part in such a manner that a diameter is gradually decreased from the leading end part toward the other end side, and which is adapted to push a portion of the opening edge part toward an inner side in the radial direction; and
a pressing part which is formed on an inner side in the radial direction from the curved part, and which is adapted to press the portion pushed by the curved part.

The caulking jig according to the first aspect further comprises:
a stress suppression part which is formed on an outer side in the radial direction from the leading end part in such a manner that a diameter is gradually increased from the leading end part toward the other end side.

The caulking jig according to the first aspect further comprises:
an insertion guide part which is formed on an outer side in the radial direction from the stress suppression part in such a manner that a diameter is increased more gently as compared to that of the stress suppression part.

The invention relating to a second aspect is the caulking jig according to the first aspect, wherein
a part between the curved part and the pressing part is formed in a smoothly curved surface shape.

The invention relating to a third aspect is a caulking method for fixing an assembling component in a mounting hole formed in a base in a caulking manner using a cylindrical caulking jig, the caulking method comprising:
by an insertion guide part of the caulking jig which is formed on an outer side in a radial direction, inserting the caulking jig into the mounting hole;
gradually pressing the caulking jig toward an opening edge part of the mounting hole such that a leading end part comes into contact with the opening edge part first;
by a curved part of the caulking jig which is formed on an inner side in the radial direction from the leading end part, pushing a portion of the opening edge part toward an inner side in the radial direction; and
by a pressing part of the caulking jig which is formed on an inner side in the radial direction from the curved part, pressing the portion pushed toward the inner side in the radial direction.

The invention relating to a fourth aspect is the caulking method according to a the third aspect, further comprising
on a progress of pressing the caulking jig, by a stress suppression part which is formed between the leading end part and the insertion guide part, suppressing stress that is applied on the caulking jig outward in the radial direction.

The invention relating to a fifth aspect is a method of manufacturing a brake fluid pressure control device for a vehicle using the caulking method according to the third aspect or the fourth aspect, comprising:
by a press fitting jig which is installed inside the caulking jig, press-fitting and fixing the assembling component in the mounting hole of the base; and
by the caulking method, fixing the assembling component in a caulking manner.

The invention relating to a sixth aspect is the method of manufacturing a brake fluid pressure control device for a vehicle according to the fifth aspect, in which
the assembling component is an electromagnetic valve,
the electromagnetic valve includes a valve body, and the valve body includes a shoulder part which receives the press fitting jig, and a press fitting part which is formed on a bottom side of the mounting hole from the shoulder part so as to have a diameter larger than that of the shoulder part,
by pressing the shoulder part by the press fitting jig, the press fitting part of the valve body is press-fit and fixed in the mounting hole, and
by the caulking method, the portion of the opening edge part is pushed against an opening side of the mounting hole of the press fitting part.

The invention relating to a seventh aspect is the method of manufacturing a brake fluid pressure control device for a vehicle according to the fifth aspect, in which
the assembling component is a pump,
the pump includes a lid member which covers an opening of the mounting hole, and the lid member includes a shoulder part which receives the press fitting jig, and a press fitting part which is formed on a bottom side of the mounting hole from the shoulder part so as to have a diameter larger than that of the shoulder part,
by pressing the shoulder part by the press fitting jig, the press fitting part of the lid member is press-fit and fixed in the mounting hole, and
by the caulking method, the portion of the opening edge part is pushed against an opening side of the mounting hole of the press fitting part.

According to the configuration of the first aspect of the invention, the portion is pushed inward in the radial direction by the curved part, and the pushed portion is pressed by the pressing part, whereby the mounting strength of the assembling component is secured, and the caulking load is prevented from being applied outward in the radial direction. Therefore, for example, even if the mounting holes are adjacent to each other, the caulking load does not exert influence the adjacent mounting holes, and thus the degree of freedom in the layout of the mounting holes is improved.

Also, it is possible to apply the caulking load inward in the radial direction, and thus the strength of the caulking part is improved, and it is possible to improve the durability.

According to the configuration of the first aspect of the invention, by the stress suppression part, it is possible to suppress stress from being applied to the caulking jig outward in the radial direction, and it is possible to improve the durability of the caulking jig.

According to the configuration of the first aspect of the invention, by the insertion guide part, it is possible to smoothly insert the caulking jig into the mounting hole, and it is possible to perform alignment of the caulking jig.

According to the configuration of the second aspect of the invention, by the curved surface part, it is possible to more suitably apply the caulking load inward in the radial direction.

According to the configuration of the third aspect of the invention, it is possible to suitably fix the assembling component in the mounting hole in the caulking manner.

According to the configuration of the fourth aspect of the invention, it is possible to improve the durability of the caulking jig.

It is preferable that the caulking method according to the fourth aspect of the invention is used in a method of manufacturing a brake fluid pressure control device for a vehicle like the fifth aspect of the invention.

If the caulking method is used to fix the electromagnetic valve in the caulking manner like the sixth aspect of the invention, the caulking load does not exert influence on the adjacent mounting holes for the electromagnetic valves. Therefore, it is possible to narrow the space between the electromagnetic valves, leading to reduce in the size of the brake fluid pressure control device for a vehicle.

If the caulking method is used to fix the pump in the caulking manner like the seventh aspect of the invention, the caulking load is applied inward in the radial direction. Therefore, it is possible to form a connection hole for a brake fluid passage (an insertion hole for connecting brake pipes) close to the mounting hole, and it is possible to improve the degree of freedom in the layout of the brake fluid passages (the insertion hole).

### BRIEF DESCRIPTION OF THE DRAWINGS

FIG. 1 is a base configuration diagram of a brake fluid pressure control device for a vehicle capable of handling two systems according to the present invention.
FIG. 2 is a perspective view of the brake fluid pressure control device for a vehicle capable of handling two systems.
FIG. 3 is a cross-sectional view of the brake fluid pressure control device for a vehicle capable of handling two systems.
FIGs. 4A and 4B are views for explaining a caulking jig.
FIGs. 5A and 5B are views for explaining the start of a caulking process.
FIGs. 6A and 6B are views for explaining the middle of the caulking process.
FIGs. 7A and 7B are views for explaining the end of the caulking process.
FIG. 8 is a view for explaining an example of the case where a pump has been fixed in a caulking manner.

### DETAILED DESCRIPTION

Embodiments of the present invention will be described below on the basis of the accompanying drawings. By the way, the drawings should be viewed in the direction of reference symbols.

Also, a control device for controlling the fluid pressures of a front-wheel brake and a rear-wheel brake will be referred to as a brake fluid pressure control device for a vehicle capable of handling two systems, and a control device for controlling the fluid pressure of one of a front-wheel brake and a rear-wheel brake will be referred to as a brake fluid pressure control device for a vehicle capable of handling one system.

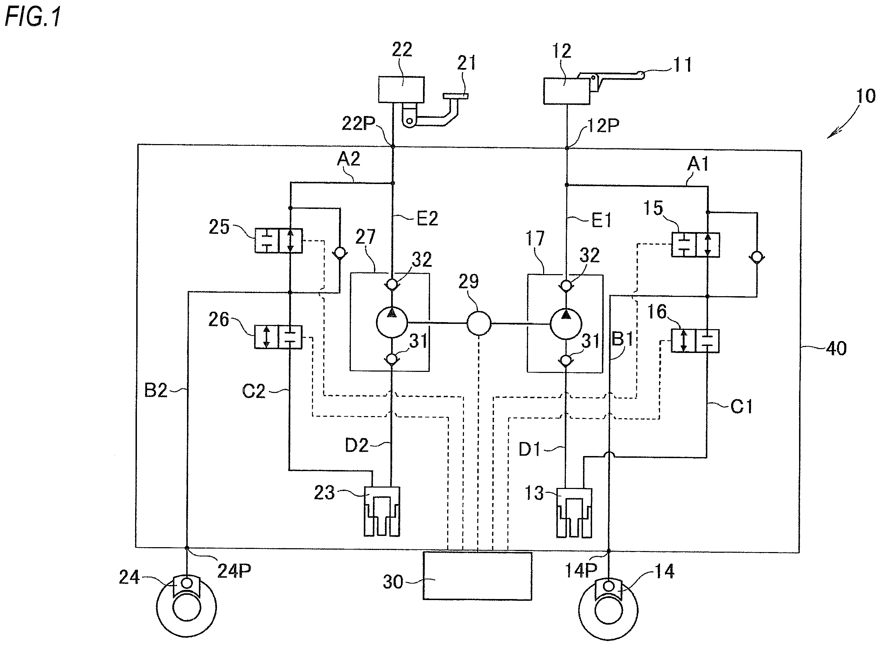

As shown in FIG. 1, a brake fluid pressure control device 10 for a vehicle capable of handling two systems includes: a first master cylinder 12 which pressurizes a hydraulic fluid in response to an operation on a brake lever, thereby producing a fluid pressure; a first reservoir 13 which temporarily stores the hydraulic fluid released from a front-wheel brake caliper 14; a first inlet control valve 15 and a first outlet control valve 16 which are assembling components that are installed between the first master cylinder 12 and the front-wheel brake caliper 14, the first inlet control valve 15 which is a normally open type electromagnetic valve, the first outlet control valve 16 which is a normally closed type electromagnetic valve; a first pump 17 which is an assembling component that is sucks the hydraulic fluid stored in the first reservoir 13 and returns the hydraulic fluid toward the first master cylinder 12; a second master cylinder 22 which pressurizes the hydraulic fluid in response to an operation on a brake pedal 21, thereby producing a fluid pressure; a second reservoir 23 which temporarily stores the hydraulic fluid released from a rear-wheel brake caliper 24; a second inlet control valve 25 and a second outlet control valve 26 which are assembling components installed between the second master cylinder 22 and the rear-wheel brake caliper 24, the second inlet control valve 25 which is a normally open type electromagnetic valve, the second outlet control valve 26 which is a normally closed type electromagnetic valve; a second pump 27 which is an assembling component that sucks the hydraulic fluid stored in the second reservoir 23 and returns the hydraulic fluid toward the second master cylinder 22; a motor 29 which drives the first and second pumps 17 and 27; a control device 30 which performs driving control on the motor 29 and opening and closing control on the first and second inlet control valves 15 and 25 and the first and second outlet control valves 16 and 26; and brake fluid passages A1, B1, C1, D1, and E1 of a first system and brake fluid passages A2, B2, C2, D2, and E2 of a second system which are provided in a base 40 and flow a brake fluid.

Here, the brake fluid passage A1 is a fluid passage extending from an inlet port 12P to the first inlet control valve 15, and the brake fluid passage B1 is a fluid pressure extending from the first inlet control valve 15 to an outlet port 14P. Also, the brake fluid passage C1 is a fluid passage extending from the brake fluid passage B1 to the first reservoir 13, and the brake fluid passage D1 is a fluid passage extending from the first reservoir 13 to the first pump 17. Further, the brake fluid passage E1 is a fluid passage extending from the first pump 17 to the brake fluid passage A1. With respect to the brake fluid passages A2, B2, C2, D2, and E2, since a description will be a duplicate, a description will not be made.

Suction valves 31 are installed on the suction sides of the first and second pumps 17 and 27, respectively, and discharge valves 32 are installed on the discharge sides of the first and second pumps 17 and 27, respectively.

Also, the base 40 includes the inlet port 12P to which a fluid passage (a brake line) extending from the first master cylinder 12 is connected, an inlet port 22P to which a fluid passage (a brake line) extending from the second master cylinder 22 is connected, the outlet port 14P to which a fluid passage (a brake line) extending to the front-wheel brake caliper 14 is connected, and an outlet port 24P to which a fluid passage (a brake line) extending to the rear-wheel brake caliper 24 is connected.

Now, the operation of the brake fluid pressure control device 10 for a vehicle will be described. However, since the first system from the brake pedal 21 to the front-wheel brake caliper 14 and the second system from the brake pedal 21 to the rear-wheel brake caliper 24 are the same in the operation, only the first system will be described.

### • State where ABS is not operated

When it is not required to lock a front wheel, the control device 30 stops the first pump 17, and opens the first inlet control valve 15, and closes the first outlet control valve 16. In this state, if the brake lever 11 is operated to the braking side, the fluid pressure is increased by the first master cylinder 12, and this fluid pressure is transmitted to the front-wheel brake caliper 14 via the first inlet control valve 15.

### • ABS (Depressurization Mode)

If it is nearly required to lock the front wheel, the control device 30 closes the first inlet control valve 15, and opens the first outlet control valve 16. The fluid pressure in the front-wheel brake caliper 14 is released to the first reservoir 13 via the first outlet control valve 16. By this, the brake fluid pressure of the front-wheel brake caliper 14 is decreased.

### • ABS (Hold Mode)

The control device 30 closes both of the first inlet control valve 15 and the first outlet control valve 16. By this, the brake fluid pressure of the front-wheel brake caliper 14 is held constantly.

### • ABS (Pressurization Mode)

When increasing the brake fluid pressure, the control device 30 opens the first inlet control valve 15, and closes the first outlet control valve 16. By this, the fluid pressure produced by the master cylinder 12 is transmitted to the front-wheel brake caliper 14. By this, the brake fluid pressure of the front-wheel brake caliper 14 is increased.

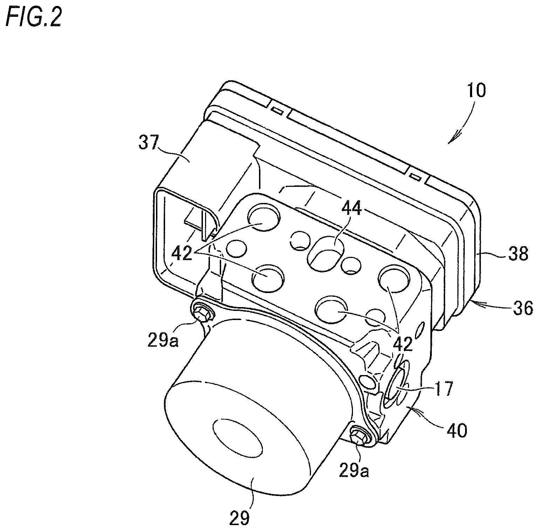

As shown in FIG. 2, the brake fluid pressure control device 10 for a vehicle includes the base 40 having a block shape, a housing 36 mounted on the base 40, and the motor 29 mounted on the base 40. On the housing 36, a cover 38 is put.

In one face of the base 40, insertion holes 42 for inserting brake pipes are formed at parts corresponding to the inlet ports 12P and 22P and the outlet ports 14P and 24P described with FIG. 1, and an oval recess 44 doubling as a clamp hole is formed at a substantially central part.

Also, the motor 29 is mounted to the base 40 with a plurality of screws 29a, and the housing 36 is integrally formed with a connector part 37 which extends along the base 40.

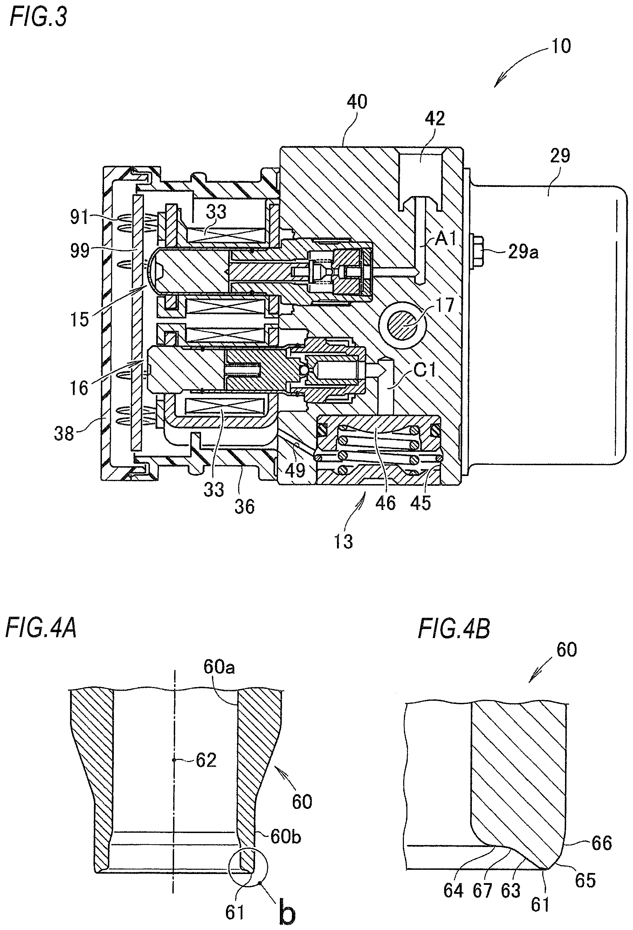

As shown in FIG. 3, in the base 40, an electromagnetic valve 15 to serve as the first inlet control valve and an electromagnetic valve 16 to serve as the first outlet control valve are mounted, and the first reservoir 13 is embedded, and the brake fluid passages A1, C1, and so on are formed, and the first pump 17 is installed between the brake fluid passage A1 and the brake fluid passage C1.

The electromagnetic valve 15 and the electromagnetic valve 16 protrude from the base 40 by about a half of the length in the axial direction, and these protruding parts are stored in the housing 36. The electromagnetic valve 15 and the electromagnetic valve 16 have electromagnetic coils 33 for driving, respectively.

In the housing 36, a control board 99 is disposed, and this control board 99 and the electromagnetic coils 33 are electrically connected through terminals 91.

In the first reservoir 13, a reservoir hole 45 is formed in the base 40, and a reservoir piston 46 is slidably inserted in the reservoir hole 45.

The installation parts which are mounted on the base 40, such as the electromagnetic valves 15, 16, 25, and 26 and the pumps 17 and 27, are fixed to the base 40 in a caulking manner.

A caulking jig 60 suitable for a caulking method will be described on the basis of FIGs. 4A and 4B.

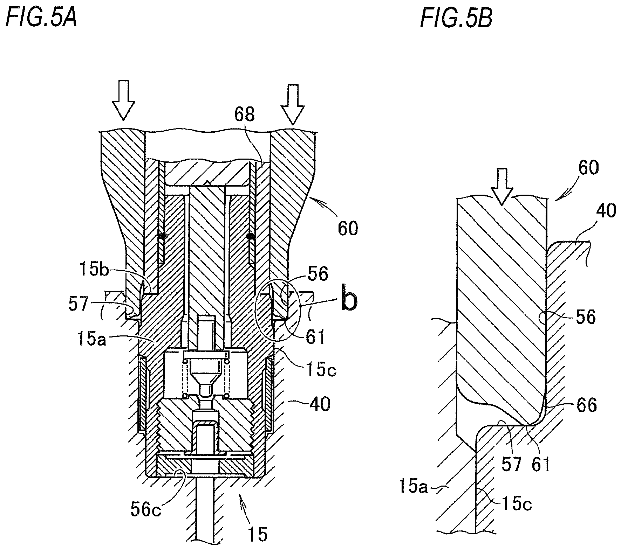

As shown in FIG. 4A, the caulking jig 60 is a cylindrical jig, and includes an inner circumferential surface 60a and an outer circumferential surface 60b. Also, the caulking jig 60 includes a leading end part 61 which protrudes toward one end side in the axial direction and which comes into contact with an opening edge part (a reference symbol "57" in (b) of FIG. 5B) of a mounting hole (a reference symbol "56" in FIG. 5B) first. The leading end part 61 is a cone point part having a V-shaped cross section.

As shown in FIG. 4B which is an enlarged view of a part "b" of FIG. 4A, the caulking jig 60 includes a curved part 63 which is formed on the inner side (the central axis 62 side shown in FIG. 4A) from the leading end part 61 in such a manner that the diameter is gradually decreased from the leading end part 61 toward the other end side and which pushes a portion of the opening edge part 57 inward in the radial direction, a pressing part 64 which is formed on the inner side from the curved part 63 on a plane substantially parallel to the opening edge part 57 and which presses the portion pushed by the curved part 63, a stress suppression part 65 which is formed in such a manner that the diameter is gradually increased outward in the radial direction (in a direction away from the central axis 62) from the leading end part 61, and an insertion guide part 66 which is formed on the outer side from the stress suppression part 65 and in which the diameter is increased more gently as compared to the stress suppression part 65.

A caulking method which is performed using the caulking jig 60 will be described on the basis of FIG. 5A to FIG. 7B. Here, an example in which the electromagnetic valve 15 which is an example of the assembling component is fixed to the base 40 in a caulking manner will be described. As shown in FIG. 5A, the electromagnetic valve 15 includes a shoulder part 15b which is formed at a valve body 15a, and a press fitting part 15c which is formed on the lower side (on the bottom side of a mounting hole 56) from the shoulder part 15b and which has a diameter larger than that of the shoulder part 15b. When the shoulder part 15b is pressed by a press fitting jig 68, the valve body 15a is pushed into the mounting hole 56, thereby being press-fit in the mounting hole 56. Thereafter, the caulking jig 60 is pressed down.

FIG. 5B is an enlarged view of a part "b" of FIG. 5A.

As shown in FIG. 5B, the caulking jig 60 is inserted into the mounting hole 56 while being guided by the insertion guide part 66, and the leading end part 61 of the caulking jig 60 comes into contact with the opening edge part 57 of the base 40.

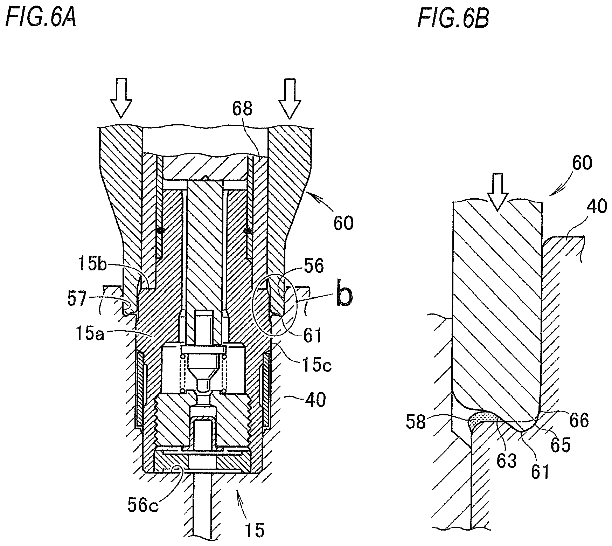

Subsequently, as shown in FIG. 6A, the pressure is gradually applied from the leading end part 61 of the caulking jig 60 to the opening edge part 57 of the mounting hole 56.

Then, as shown in FIG. 6B which is an enlarged view of a part "b" of FIG. 6A, the leading end part 61 of the caulking jig 60 intrudes into the opening edge part 57, and the portion of the opening edge part 57 is pushed inward in the radial direction by the curved part 63 of the caulking jig 60 which is formed on the inner side in the radial direction from the leading end part 61. As a result, a portion 58 swells. This portion 58 is pushed inward in the radial direction by the leading end part 61.

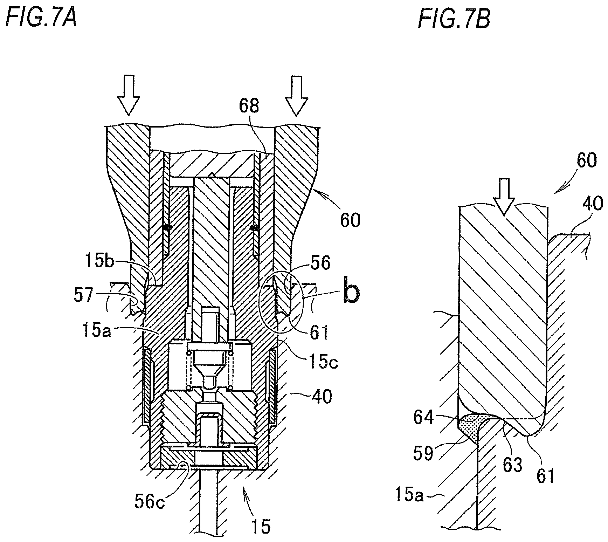

As shown in FIG. 7A, the caulking jig 60 is further pressed.

As shown in FIG. 7B which is an enlarged view of a part "b" of FIG. 7A, the portion of the opening edge part 57 is pushed against the upper side of the press fitting part 15c (the opening side of the mounting hole 56) and is pressed. By this portion 59, the valve body 15a is fixed to the base 40 in a caulking manner.

Also in FIG. 6B and FIG. 7B, on the progress of pressing the caulking jig 60, it is possible to advance the caulking method while suppressing stress from being applied to the caulking jig 60 outward in the radial direction, by the stress suppression part 65 formed between the leading end part 61 and the insertion guide part 66.

In other words, it is possible to improve the durability of the caulking jig 60, using the stress suppression part 65.

As described above, the caulking jig 60 includes the leading end part 61, the curved part 63, and the pressing part 64. Therefore, the portion is pushed inward in the radial direction by the curved part 63, and the pushed portion is pressed by the pressing part 64, whereby the mounting strength of an assembling component (such as the electromagnetic valve 15) is secured, and the caulking load is prevented from being applied outward in the radial direction. Therefore, for example, even if mounting holes are adjacent to each other, the caulking load does not exert influence on the adjacent mounting holes, and thus the degree of freedom in the layout of the mounting holes is improved. Also, it is possible to apply the caulking load inward in the radial direction, and thus the strength of the caulking part is improved, and it is possible to improve the durability of the caulking part.

Since the stress suppression part 65 is added to the caulking jig 60, it is possible to suppress stress from being applied to the caulking jig 60 outward in the radial direction, by the stress suppression part 65, and it is possible to improve the durability of the caulking jig 60.

Since the insertion guide part 66 is added to the caulking jig 60, by the insertion guide part 66, it is possible to smoothly insert the caulking jig 60 into the mounting hole 56, and it is possible to perform alignment (centering) of the caulking jig 60.

Preferably, in FIG. 4A, the curved part 63 and the pressing part 64 are connected by a smoothly curved surface part 67, whereby a smoothly curved surface shape is formed. By the curved surface part 67, it is possible to more suitably apply the caulking load inward in the radial direction.

When the present invention is used to fix the electromagnetic valve 15 in a caulking manner, since the caulking load is applied inward in the radial direction and the caulking load is not applied to the adjacent mounting holes (electromagnetic valves), it is possible to narrow the space between the electromagnetic valves, leading to reduce in the size of the brake fluid pressure control device 10 for a vehicle. The same is true with respect to the other electromagnetic valves 16, 25, and 26.

Although the caulking method of the electromagnetic valve which is an example of the assembling component has been described above, the caulking method described above can be applied to various assembling components. For example, the caulking method can also be applied to the pumps 17 and 27 which are assembling components.

Now, a manufacturing method in the case where the pump 17 to be installed in the brake fluid pressure control device 10 for a vehicle has been specifically designated will be described in detail. However, the caulking method is similar to that in the case of the electromagnetic valve 15 described above.

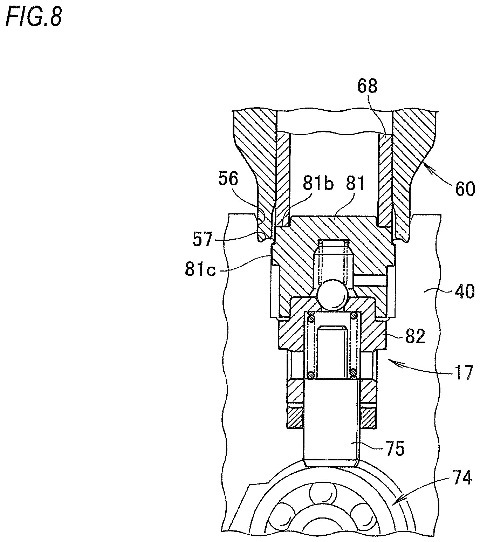

As shown in FIG. 8, the pump 17 includes a lid member 81 for covering an opening of a mounting hole 56, and the lid member 81 includes a shoulder part 81b, and a press fitting part 81c which is formed on the lower side (on the bottom side of the mounting hole 56) from the shoulder part 81b and which has a diameter larger than that of the shoulder part 81b. By pressing the shoulder part 81b by the press fitting jig 68, the press fitting part 81c of the lid member 81 is press-fit and fixed in the mounting hole 56, and by the caulking method described with FIG. 5A to FIG. 7B, the portion of the opening edge part 57 is pushed and pressed on the upper side of the press fitting part 81c (the opening side of the mounting hole 56).

When the present invention is used to fix the pump (the lid member 81) in a caulking manner, since the caulking load is applied inward in the radial direction, it is possible to form connection holes for brake fluid passages close to the mounting hole 56, and thus it is possible to improve the degree of freedom in the layout of the brake fluid passages. This is true with respect to the pump 27.

Although not shown in the drawings, the present invention can also be applied to a brake fluid pressure control device 10 capable of handling one system.

Further, the present invention is suitable for a motorcycle, however, it can also be applied to a tricycle, and can be applied to a general vehicle as well.

## Claims

1. A cylindrical caulking jig (60) for fixing an assembling component (15, 16, 25, 26; 17, 27) in a mounting hole (56) formed in a base (40) in a caulking manner, the caulking jig (60) comprising:
a leading end part (61) which protrudes on one end side in an axial direction, and which is adapted to come into contact with an opening edge part of the mounting hole first;
a curved part (63) which is formed on an inner side in a radial direction from the leading end part (61) in such a manner that a diameter is gradually decreased from the leading end part (61) toward the other end side, and which is adapted to push a portion of the opening edge part (57) toward an inner side in the radial direction;
a pressing part (64) which is formed on an inner side in the radial direction from the curved part (63), and which is adapted to press the portion pushed by the curved part (63);
a stress suppression part (65) which is formed on an outer side in the radial direction from the leading end part (61) in such a manner that a diameter is gradually increased from the leading end part (61) toward the other end side; and
an insertion guide part (66) which is formed on an outer side in the radial direction from the stress suppression part (65);
**characterized in that**
the insertion guide part (66) is formed on the outer side in the radial direction from the stress suppression part (65) in such a manner that a diameter is increased more gently as compared to that of the stress suppression part (65).

2. The caulking jig (60) according to claim 1, in which a part (67) between the curved part (63) and the pressing part (64) is formed in a smoothly curved surface shape.

3. A caulking method for fixing an assembling component (15, 16, 25, 26; 17, 27) in a mounting hole (56) formed in a base (40) in a caulking manner using a cylindrical caulking jig (60), the caulking method **characterized by** comprising:
by an insertion guide part (66) of the caulking jig (60) which is formed on an outer side in a radial direction, inserting the caulking jig (60) into the mounting hole (56);
gradually pressing the caulking jig (60) toward an opening edge part (57) of the mounting hole (56) such that a leading end part (61) of the caulking jig (60) comes into contact with the opening edge part (57) first;
by a curved part (63) of the caulking jig (60) which is formed on an inner side in the radial direction from the leading end part (61), pushing a portion of the opening edge part (57) toward an inner side in the radial direction; and
by a pressing part (64) of the caulking jig (60) which is formed on an inner side in the radial direction from the curved part (63), pressing the portion pushed toward the inner side in the radial direction.

4. The caulking method according to claim 3, further comprising
on a progress of pressing the caulking jig (60), by a stress suppression part (65) which is formed between the leading end part (61) and the insertion guide part (66), suppressing stress that is applied on the caulking jig (60) outward in the radial direction.

5. A method of manufacturing a brake fluid pressure control device (10) for a vehicle using the caulking method according to claim 3 or 4, comprising:
by a press fitting jig (68) which is installed inside the caulking jig (60), press-fitting and fixing the assembling component (15, 16, 25, 26; 17, 27) in the mounting hole (56) of the base (40); and
by the caulking method, fixing the assembling component (15, 16, 25, 26; 17, 27) in a caulking manner.

6. The method of manufacturing a brake fluid pressure control device (10) for a vehicle according to claim 5, in which
the assembling component is an electromagnetic valve (15, 16, 25, 26),
the electromagnetic valve (15, 16, 25, 26) includes a valve body (15a), and the valve body (15a) includes a shoulder part (15b) which receives the press fitting jig (68), and a press fitting part (15c) which is formed on a bottom side of the mounting hole (56) from the shoulder part (15b) and which has a diameter larger than that of the shoulder part (15b),
by pressing the shoulder part (15b) by the press fitting jig (68), the press fitting part (15c) of the valve body (15a) is press-fit and fixed in the mounting hole (56), and
by the caulking method, the portion of the opening edge part (57) is pushed against an opening side of the mounting hole (56) of the press fitting part (15c).

7. The method of manufacturing a brake fluid pressure control device for a vehicle according to claim 5, in which
the assembling component is a pump (17, 27),
the pump (17, 27) includes a lid member (81) which covers an opening of the mounting hole (56), and the lid member includes a shoulder part (81b) which receives the press fitting jig (68), and a press fitting part (81c) which is formed on a bottom side of the mounting hole (56) from the shoulder part (81b) and which has a diameter larger than that of the shoulder part (81b),
by pressing the shoulder part (81b) by the press fitting jig (68), the press fitting part (81c) of the lid member (81) is press-fit and fixed in the mounting hole (56), and
by the caulking method, the portion of the opening edge part (57) is pushed against an opening side of the mounting hole (56) of the press fitting part (81c).

## Patentansprüche

1. Zylindrische Verstemmvorrichtung (60) zum Befestigen eines Zusammenbauteils (15, 16, 25, 26; 17, 27) auf verstemmende Weise in einem in einer Basis (40) gebildeten Montageloch (56), wobei die Verstemmvorrichtung (60) umfasst:
ein vorderes Endteil (61), das an einer Endseite in einer axialen Richtung vorsteht und das angepasst ist, zuerst mit einem Öffnungsrandteil des Montagelochs in Kontakt zu kommen;
ein gekrümmtes Teil (63), das an einer Innenseite in einer radialen Richtung von dem vorderen Endteil (61) derart gebildet ist, dass ein Durchmesser von dem vorderen Endteil (61) zu der anderen Endseite hin allmählich verkleinert wird, und das angepasst ist, um einen Abschnitt des Öffnungsrandteils (57) zu einer Innenseite in der radialen Richtung zu schieben;
ein Andrückteil (64), das an einer Innenseite in der radialen Richtung aus dem gekrümmten Teil (63) gebildet ist und das angepasst ist, den von dem gekrümmten Teil (63) geschobenen Abschnitt anzudrücken;
ein Spannungsunterdrückungsteil (65), das an einer Außenseite in der radialen Richtung von dem vorderen Endteil (61) derart gebildet ist, dass ein Durchmesser von dem vorderen Endteil (61) zu der anderen Endseite hin allmählich vergrößert wird; und
ein Einschubführungsteil (66), das an einer Außenseite in der radialen Richtung aus dem Spannungsunterdrückungsteil (65) gebildet ist;
**dadurch gekennzeichnet, dass**
das Einschubführungsteil (66) an der Außenseite in der radialen Richtung aus dem Spannungsunterdrückungsteil (65) auf eine solche Weise gebildet ist, dass ein Durchmesser sanfter vergrößert wird im Vergleich zu dem des Spannungsunterdrückungsteils (65).

2. Verstemmvorrichtung (60) nach Anspruch 1, bei der ein Teil (67) zwischen dem gekrümmten Teil (63) und dem Andrückteil (64) in einer sanft gekrümmten Oberflächenform gebildet ist.

3. Verstemmverfahren zum Befestigen eines Zusammenbauteils (15, 16, 25, 26; 17, 27) in einem Montageloch (56), das auf eine verstemmende Weise unter Verwendung einer zylindrischen Verstemmvorrichtung (60) in einer Basis (40) gebildet ist, wobei das Verstemmverfahren **dadurch gekennzeichnet ist, dass** es Folgendes umfasst:
Einschub der Verstemmvorrichtung (60) in das Montageloch (56) durch ein Einschubführungsteil (66) der Verstemmvorrichtung (60), das an einer Außenseite in radialer Richtung gebildet ist;
allmähliches Andrücken der Verstemmvorrichtung (60) in Richtung eines Öffnungsrandteils (57) des Montagelochs (56), so dass ein vorderes Endteil (61) der Verstemmvorrichtung (60) zuerst mit dem Öffnungsrandteil (57) in Kontakt kommt;
Schieben eines Abschnitts des Öffnungsrandteils (57) in Richtung einer Innenseite in der radialen Richtung von einem gekrümmten Teil (63) der Verstemmvorrichtung (60), das an einer Innenseite in der radialen Richtung vom vorderen Endteil (61) gebildet ist; und
Andrücken des in Richtung der Innenseite in der radialen Richtung hin geschobenen Abschnitts durch ein Andrückteil (64) der Verstemmvorrichtung (60), das an einer Innenseite in der radialen Richtung aus dem gekrümmten Teil (63) gebildet wird.

4. Verstemmverfahren nach Anspruch 3, weiter umfassend
bei einem Fortschritt des Andrückens der Verstemmvorrichtung (60), Unterdrücken der Spannung, die auf die Verstemmvorrichtung (60) nach außen in der radialen Richtung ausgeübt wird, durch ein Spannungsunterdrückungsteil (65), das zwischen dem vorderen Endteil (61) und dem Einschubführungsteil (66) gebildet ist.

5. Verfahren zur Herstellung einer Bremsflüssigkeits-Druckregelvorrichtung (10) für ein Fahrzeug unter Verwendung des Verstemmverfahrens nach Anspruch 3 oder 4, umfassend:
Einpressen und Befestigen des Zusammenbauteils (15, 16, 25, 26; 17, 27) in das Montageloch (56) der Basis (40) durch eine Einpressvorrichtung (68), die innerhalb der Verstemmvorrichtung (60) installiert ist; und
Befestigen des Zusammenbauteils (15, 16, 25, 26; 17, 27) auf eine verstemmende Weise durch das Verstemmverfahren.

6. Verfahren zur Herstellung einer Bremsflüssigkeits-Druckregelvorrichtung (10) für ein Fahrzeug nach Anspruch 5, bei dem
das Zusammenbauteil ein elektromagnetisches Ventil (15, 16, 25, 26) ist,
das elektromagnetische Ventil (15, 16, 25, 26) einen Ventilkörper (15a) einschließt, und der Ventilkörper (15a) ein Schulterteil (15b), das die Einpressvorrichtung (68) aufnimmt, und ein Einpressteil (15c) einschließt, das an einer Unterseite des Montagelochs (56) aus dem Schulterteil (15b) gebildet ist und das einen größeren Durchmesser als der des Schulterteils (15b) aufweist,
durch Andrücken des Schulterteils (15b) durch die Einpressvorrichtung (68) das Einpressteil (15c) des Ventilkörpers (15a) in das Montageloch (56) eingepresst und befestigt wird, und
durch das Verstemmverfahren der Abschnitt des Öffnungsrandteils (57) gegen eine Öffnungsseite des Montagelochs (56) des Einpressteils (15c) geschoben wird.

7. Verfahren zur Herstellung einer Bremsflüssigkeits-Druckregelvorrichtung für ein Fahrzeug nach Anspruch 5, bei dem
das Zusammenbauteil eine Pumpe (17, 27) ist,
die Pumpe (17, 27) ein Deckelelement (81) einschließt, das eine Öffnung des Montagelochs (56) abdeckt, und das Deckelelement ein Schulterteil (81b), das die Einpressvorrichtung (68) aufnimmt, und ein Einpressteil (81c) einschließt, das an einer Unterseite des Montagelochs (56) aus dem Schulterteil (81b) gebildet ist und das einen größeren Durchmesser als der des Schulterteils (81b) aufweist,
durch Andrücken des Schulterteils (81b) durch die Einpressvorrichtung (68) das Einpressteil (81c) des Deckelelements (81) in das Montageloch (56) eingepresst und befestigt wird, und
durch das Verstemmverfahren der Abschnitt des Öffnungsrandteils (57) gegen eine Öffnungsseite des Montagelochs (56) des Einpressteils (81c) geschoben wird.

## Revendications

1. Gabarit de calfeutrage cylindrique (60) pour fixer un composant d'assemblage (15, 16, 25, 26; 17, 27) dans un trou de montage (56) formé dans une base (40) de manière calfeutrée, le gabarit de calfeutrage (60) comprenant :
une partie d'extrémité avant (61) qui fait saillie sur un côté d'extrémité dans une direction axiale et qui est conçue pour venir d'abord en contact avec une partie de bord d'ouverture du trou de montage ;
une partie incurvée (63) qui est formée sur un côté interne dans une direction radiale depuis la partie d'extrémité avant (61) de telle manière qu'un diamètre soit petit à petit réduit depuis la partie d'extrémité avant (61) vers l'autre côté d'extrémité, et qui est conçue pour pousser une portion de la partie de bord d'ouverture (57) vers un côté interne dans la direction radiale ;
une partie de pression (64) qui est formée sur un côté interne dans la direction radiale depuis la partie incurvée (63) et qui est conçue pour presser la portion poussée par la partie incurvée (63) ;
une partie de suppression de contrainte (65) qui est formée sur un côté externe dans la direction radiale depuis la partie d'extrémité avant (61) de telle manière qu'un diamètre soit petit à petit augmenté depuis la partie d'extrémité avant (61) vers l'autre côté d'extrémité ; et
une partie de guide d'insertion (66) qui est formée sur un côté externe dans la direction radiale depuis la partie de suppression de contrainte (65) ;
**caractérisé en ce que**
la partie de guide d'insertion (66) est formée sur le côté externe dans la direction radiale depuis la partie de suppression de contrainte (65) de telle manière qu'un diamètre soit augmenté plus progressivement par comparaison avec celui de la partie de suppression de contrainte (65).

2. Gabarit de calfeutrage (60) selon la revendication 1, dans lequel une partie (67) entre la partie incurvée (63) et la partie de pression (64) est formée dans une forme de surface incurvée en douceur.

3. Procédé de calfeutrage pour fixer un composant d'assemblage (15, 16, 25, 26 ; 17, 27) dans un trou de montage (56) formé dans une base (40) de manière calfeutrée à l'aide d'un gabarit de calfeutrage cylindrique (60), le procédé de calfeutrage étant **caractérisé par le fait qu'**il comprend les étapes consistant à :
au moyen d'une partie de guide d'insertion (66) du gabarit de calfeutrage (60) qui est formée sur un côté externe dans une direction radiale, insérer le gabarit de calfeutrage (60) dans le trou de montage (56) ;
presser petit à petit le gabarit de calfeutrage (60) vers une partie de bord d'ouverture (57) du trou de montage (56) de telle sorte qu'une partie d'extrémité avant (61) du gabarit de calfeutrage (60) vienne d'abord en contact avec la partie de bord d'ouverture (57) ;
au moyen d'une partie incurvée (63) du gabarit de calfeutrage (60) qui est formée sur un côté interne dans la direction radiale depuis la partie d'extrémité avant (61), pousser une portion de la partie de bord d'ouverture (57) vers un côté interne dans la direction radiale ; et
au moyen d'une partie de pression (64) du gabarit de calfeutrage (60) qui est formée sur un côté interne dans la direction radiale depuis la partie incurvée (63), presser la portion poussée vers le côté interne dans la direction radiale.

4. Procédé de calfeutrage selon la revendication 3, comprenant en outre les étapes consistant à
lors de la progression de la pression du gabarit de calfeutrage (60), au moyen d'une partie de suppression de contrainte (65) qui est formée entre la partie d'extrémité avant (61) et la partie de guide d'insertion (66), supprimer une contrainte qui est appliquée sur le gabarit de calfeutrage (60) vers l'extérieur dans la direction radiale.

5. Procédé de fabrication d'un dispositif de commande de pression de liquide de frein (10) pour un véhicule à l'aide du procédé de calfeutrage selon la revendication 3 ou 4, comprenant les étapes consistant à :
au moyen d'un gabarit d'emmanchement à la presse (68) qui est installé à l'intérieur du gabarit de calfeutrage (60), emmancher à la presse et fixer le composant d'assemblage (15, 16, 25, 26 ; 17, 27) dans le trou de montage (56) de la base (40) ; et
au moyen du procédé de calfeutrage, fixer le composant d'assemblage (15, 16, 25, 26 ; 17, 27) de manière calfeutrée.

6. Procédé de fabrication d'un dispositif de commande de pression de liquide de frein (10) pour un véhicule selon la revendication 5, dans lequel
le composant d'assemblage est une vanne électromagnétique (15, 16, 25, 26),
la vanne électromagnétique (15, 16, 25, 26) inclut un corps de vanne (15a), et le corps de vanne (15a) inclut une partie d'épaulement (15b) qui reçoit le gabarit d'emmanchement à la presse (68), et une partie d'emmanchement à la presse (15c) qui est formée sur un côté inférieur du trou de montage (56) à partir de la partie d'épaulement (15b) et qui présente un diamètre plus important que celui de la partie d'épaulement (15b),
en pressant la partie d'épaulement (15b) au moyen du gabarit d'emmanchement à la presse (68), la partie d'emmanchement à la presse (15c) du corps de vanne (15a) est emmanchée à la presse et fixée dans le trou de montage (56), et
au moyen du procédé de calfeutrage, la portion de la partie de bord d'ouverture (57) est poussée contre un côté d'ouverture du trou de montage (56) de la partie d'emmanchement à la presse (15c).

7. Procédé de fabrication d'un dispositif de commande de pression de liquide de frein pour un véhicule selon la revendication 5, dans lequel
le composant d'assemblage est une pompe (17, 27),
la pompe (17, 27) inclut un élément de couvercle (81) qui recouvre une ouverture du trou de montage (56), et l'élément de couvercle inclut une partie d'épaulement (81b) qui reçoit le gabarit d'emmanchement à la presse (68), et une partie d'emmanchement à la presse (81c) qui est formée sur un côté inférieur du trou de montage (56) à partir de la partie d'épaulement (81b) et qui présente un diamètre plus important que celui de la partie d'épaulement (81b),
en pressant la partie d'épaulement (81b) au moyen du gabarit d'emmanchement à la presse (68), la partie d'emmanchement à la presse (81c) de l'élément de couvercle (81) est emmanchée à la presse et fixée dans le trou de montage (56), et
au moyen du procédé de calfeutrage, la portion de la partie de bord d'ouverture (57) est poussée contre un côté d'ouverture du trou de montage (56) de la partie d'emmanchement à la presse (81c).
